# EUROPEAN PATENT APPLICATION

(11) **EP 4 660 824 A1**
(43) Date of publication of application: **10.12.2025**
(21) Application number: 25180877.0
(22) Date of filing: 04.06.2025
(51) Int. Cl.: G06F 16/242, G06F 16/248, G06F 16/3329, G06F 16/9032

(54) **APPLICATION SERVER AND METHOD FOR QUESTION-AND-ANSWER GENERATION USING A FORTUNE ANALYTICS LANGUAGE MODEL**

(30) Priority: 04.06.2024 US 202463655995 P
(71) Applicant: Accenture Global Solutions Limited, Dublin 4 (IE)
(72) Inventor: WEI, Wei, Burlingame, CA 94010 (US); BAO, Yujia, Cambridge, MA 02139 (US); SHAH, Ankit Parag, Mountain View, CA 94040 (US); PARK, Su Min, San Francisco, CA 94041 (US); NOMELI, Mo, Rancho Cucamonga, CA 91737 (US); NARANG, Neeru, Woodland, CA 95776 (US); PEARSON, Natalie Elizabeth, Marina del Rey, CA 90292 (US); GHOSAL, Koustav, Dublin 1, D01F797 (IE); HE, Yuan, San Jose, CA 95113 (US); WEI, Jiaheng, Santa Clara, CA 95054 (US); WEERASOORIYA, Tharindu Cyril, Mountain View, CA 94041 (US); MEHTA, Ankit, Cambridge, MA 02139 (US); MIAO, Yingyu, Cupertino, CA 95014 (US); GUAN, Lan, New York, NY 10023 (US); ESCOBAR MORA, Gina Marcela, San Francisco, CA 94114 (US); LASHKEVICH, Daria, 1015 Riga (LV); SONG, Jingna, Mountain View, CA 94040 (US); BOULAY, Fabien, Keller, TX 76248 (US); HEJNA JR., Donald Joseph, Los Altos, CA 94022 (US)
(74) Representative: Müller-Boré & Partner Patentanwälte PartG mbB

(57) **Abstract**

Method, application server, and non-transitory computer-readable medium for question- and-answer generation using a fortune analytics language model (FALM) are disclosed. In an aspect, a pre-trained large language model (LLM) is generated using information associated with a particular practice area. Further, fine tuning of the pre-trained LLM is performed for a plurality of different aspects to generate the FALM. A user query is then received from a client device. A plurality of new queries are then regenerated based upon the user query. Furthermore, the new queries are executed using the FALM to receive a plurality of answers, each answer of the plurality of answers corresponds with a new query of the new queries. Each answer is then ranked. Also, one or more answers are presented on a display of the client device, the one or more answers are displayed according to a predefined criterion and based upon the ranking.

## Description

### CROSS-REFERENCE TO RELATED APPLICATION(S)

This application claims priority under 35 USC §119(e) to US Provisional Application No 63/655,995, filed on June 4, 2024, the entire contents of which are hereby incorporated by reference in the entirety for all purposes.

### TECHNICAL FIELD

Various examples described herein relate generally to a method, an application server, and non-transitory computer readable medium for question and answer generation. Specifically, the disclosed examples are directed to techniques for question-and-answer generation using a fortune analytics language model (FALM).

### BACKGROUND

As industry dynamics grow increasingly volatile and complex, organizations must harness advanced tools and technologies to sustain a competitive edge. In recent years, large language models (LLMs) have emerged as powerful engines for natural language understanding and generation. The LLMs demonstrate capabilities in processing vast datasets and extracting meaningful insights. Further, the LLMs have demonstrated capabilities in applications such as sentiment analysis, summarization, and trend detection, which are of great value to market analysts and subject matter experts. Despite these capabilities, the application of the LLMs in a domain of media analytics remains limited in realizing their full potential. General-purpose LLMs, while highly capable in open-domain contexts, often struggle to maintain high accuracy and contextual fidelity when applied to real-world industry scenarios.

### SUMMARY

Implementations of the present disclosure are generally directed to question-and-answer generation using a fortune analytics language model (FALM). More particularly, implementations of the present disclosure are directed to a training methodology for the FALM, facilitating domain-specific question and answering tailored to industry applications.

In some examples, aspects of the subject matter described herein provide a computer-implemented method for generation of question and answer using the FALM. The method may include generating a pre-trained large language model (LLM) using information associated with a particular practice area, performing fine tuning of the pre-trained LLM for a plurality of different aspects to generate the FALM, receiving, from a client device, a user query, regenerating a plurality of new queries based upon the received user query, executing the plurality of new queries using the FALM to receive a plurality of answers, each answer of the plurality of answers corresponds with a new query of the plurality of new queries, ranking each answer of the plurality of answers, and presenting, on a display of the client device, one or more answers of the plurality of answers, wherein the one or more answers are displayed according to a predefined criterion and based upon the ranking.

The present disclosure further describes an application server for implementing the method provided herein. The present disclosure also describes one or more non-transitory computer-readable media coupled to the one or more processors of the one or more computing devices and having instructions stored thereon which, when executed by the one or more processors, cause the one or more processors to perform operations in accordance with the method described herein.

It is appreciated that the method in accordance with the present disclosure can include any combination of the aspects and features described herein. That is, the method in accordance with the present disclosure is not limited to the combinations of aspects and features specifically described herein but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF THE DRAWINGS

Various examples in accordance with the present disclosure will be described with reference to the drawings, in which:
FIG. 1 depicts an example environment that may be used to execute implementations of the present disclosure.
FIG. 2 depicts an example architecture of an application server, in accordance with implementations of the present disclosure.
FIG. 3 depicts an example schematic diagram illustrating various components of a fortune analytics language model (FALM) framework, in accordance with implementations of the present disclosure.
FIG. 4 depicts an example schematic diagram illustrating an article-based question-answering aspect, in accordance with implementations of the present disclosure.
FIG. 5 depicts an example diagram illustrating multiple topics, in accordance with implementations of the present disclosure.
FIG. 6 depicts an example schematic diagram illustrating a topic-based question-answering aspect, in accordance with implementations of the present disclosure.
FIG. 7 depicts an example flow diagram illustrating a metric-based question-answering aspect, in accordance with implementations of the present disclosure.
FIG. 8 depicts an example diagram illustrating a ranking-based question-answering, in accordance with implementations of the present disclosure.
FIG. 9 depicts an example schematic diagram illustrating a persona-based question-answering aspect, in accordance with implementations of the present disclosure.
FIG. 10 depicts an example flow diagram illustrating various components of a content reference engine of FIG. 2, in accordance with implementations of the present disclosure.
FIG. 11 is a flow diagram that represents an example method for generation of question and answer using the FALM, in accordance with implementations of the present disclosure.
FIG. 12 depicts a block diagram of an example computer system that may be used to implement the method for generation of question and answer using the FALM, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., re labels to distinguish components or blocks of otherwise similar names but does not imply any sequence or numerical limitation.

"And/or" for two possibilities means either or both stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality/acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

This disclosure should be interpreted according to the exemplary definitions provided below. In case of a contradiction between the definitions in the definitions section and other sections of this disclosure, this section should prevail. In case of a contradiction between the definitions in this section and a definition or a description in any other document, including in another document incorporated in this disclosure by reference, this section should prevail, even if the definition or the description in the other document is commonly accepted by a person of ordinary skill in the art.

The terms "question" and "query" are used interchangeably throughout the document.

Recent advances in large language models (LLMs) have significantly enhanced machine understanding and generation of natural language. These models, trained on vast corpora of general-purpose text, demonstrate strong performance across a wide range of tasks, including summarization, translation, and open-domain question answering. However, general-purpose LLMs often struggle with domain-specific reasoning, particularly in business-related contexts that demand financial literacy, market awareness, and an understanding of organizational decision-making processes.

Existing fine-tuning approaches or prompt engineering methods may partially adapt LLMs to specific industries or tasks. Yet, the existing approaches often lack the robustness required for accurate and reliable responses to queries related to a particular practice area. Such queries may include financial forecasting, competitive analysis, risk assessment, or interpreting regulatory documents, all of which require domain-specific reasoning capabilities that general models are not explicitly trained for. Therefore, the existing approaches typically do not provide a structured methodology that integrates domain-relevant knowledge sources, benchmark tasks, and evaluation strategies customized specifically to domain-centric applications. Also, the existing approaches for creating in-domain high-quality question answering dataset often require intensive human annotation.

Implementations of the present disclosure may use a Fortune Analytics Language Model (FALM), a pioneering domain-centric Artificial Intelligence (AI) model designed to overcome the above-mentioned challenges and provide users with intuitive and insightful analysis. The present disclosure may use the FALM to provide users with direct access to comprehensive analysis, including market trends, organization performance metrics, and expert insights. Unlike the generic LLMs, the FALM may leverage a curated knowledge base built from professional journalism, enabling it to deliver precise and in-depth answers to intricate questions.

By leveraging valuable organization and people rankings, the FALM can answer complex questions about the ever-changing industry world. The FALM can identify trends across diverse topics, from market fluctuations to industry leadership shifts, and offer actionable suggestions based on analyzed financial metrics. For instance, if a user asks, "What is the latest trend related to inflation?," the FALM may analyze most recent news articles, reports, and video interviews to deliver a comprehensive and accurate answer.

Further, the implementations of the present technique may tackle knowledge comprehension across various information sources by categorizing FALM's question and answer (QA) functionality into core subtasks (e.g., article-based QA, metric QA, topic QA and so on), each focusing on a specific information need.

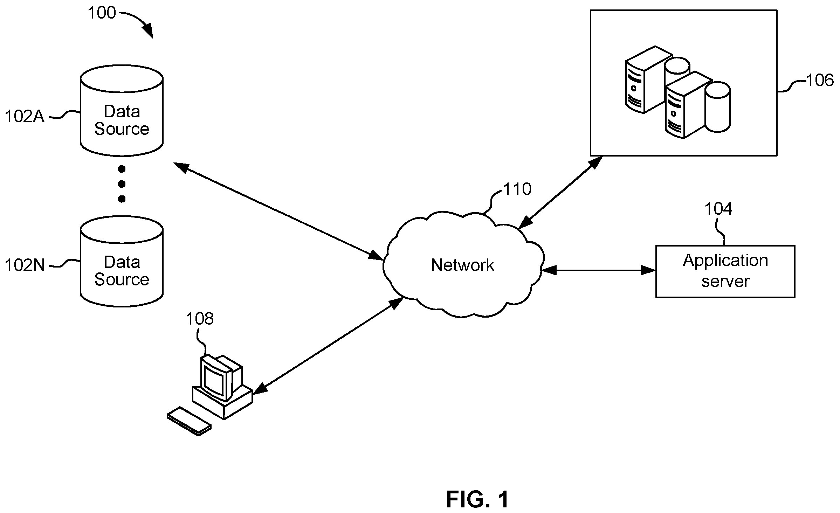

FIG. 1 depicts an example environment 100 that may be used to execute implementations of the present disclosure. The example environment 100, shown in FIG. 1, includes data sources 102A-N, an application server 104, a storage device 106 and a client device 108. For simplicity, a single client device 108 is depicted in FIG. 1, however it should be noted that the example environment 100 may include one or more client devices. The data sources 102A-N, the application server 104, the storage device 106 and the client device 108 may communicate with each other using a network 110. In some examples, the network 110 may include a Local Area Network (LAN), a Wide Area Network (WAN), the Internet, or a combination thereof. In some examples, the network 110 may be accessed over a wired and/or a wireless communication link.

The plurality of data sources 102A-N may include communication devices and/or computing devices that includes data associated with domain knowledge including news data, printed articles, video interviews, financial metrics, organization rankings, and the like. The plurality of data sources 102A-N may include a server such as a web server, a database server, a host server, a proxy server, a virtual server (e.g., executing on a computing hardware), or a server in a cloud computing system.

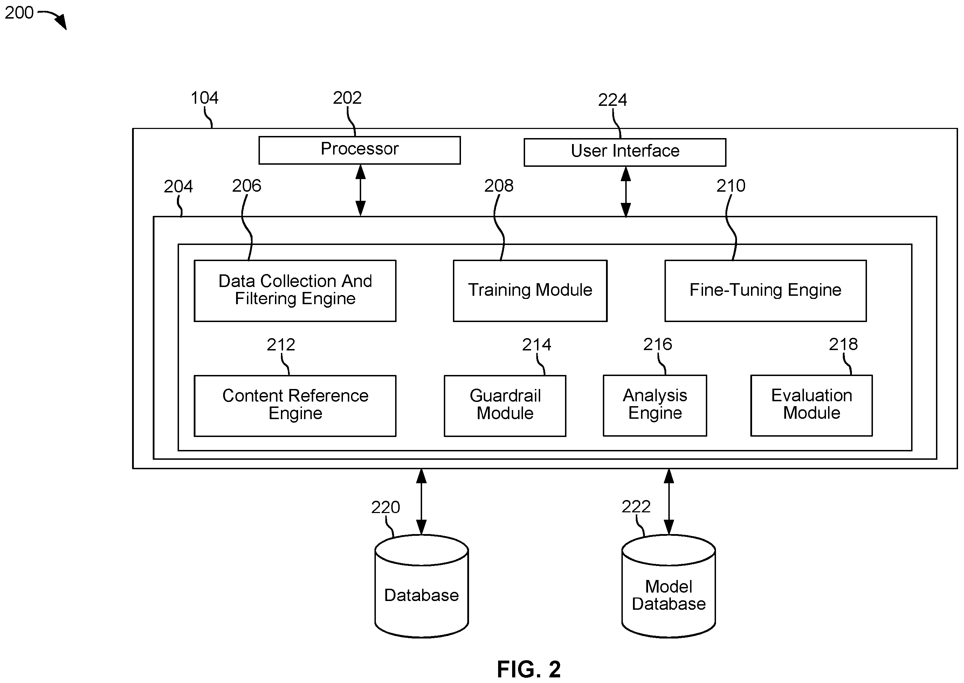

The application server 104 is a computing device or system that receives or obtains the data from the plurality of data sources 102A-N. The application server 104 may then process and store the data in the storage device 106. In some examples, the application server 104 may include internal or external servers, quantum computers, desktops, laptops, smartphones, tablets, and/or the like. It is contemplated that implementations of the present disclosure may be realized with any appropriate type of computing device or computing platform. In some examples, the application server 104 may display one or more Graphical User Interfaces (GUIs) that enable the user of the client device 108 to interact with a computing platform executing the question-and-answer generation. Examples of the computing platform may include content delivery platforms, multimedia-based platforms, and/or the like. Interacting with the computing platform may include providing feedback during the process of question-and-answer generation. For example, the application server 104 is described in more detail with reference to FIG. 2.

While only one application server 104 is shown in FIG. 1, there may be more than one application server 104, and each of the application server 104 includes at least one server system. In some examples, the server system hosts one or more computer implemented services that users can interact with by using the client device 108. For example, components of enterprise systems and applications can be hosted on one or more of the application server 104. In some examples, the application server 104 can be provided as an on-premises system that is operated by an enterprise or a third-party taking part in cross-platform interactions and data management. In some examples, the application server 104 can be provided as an off-premises system (e.g., cloud or on-demand) that is operated by an enterprise or a third-party on behalf of an enterprise.

In some examples, the client device 108 may include computer executable applications executed thereon. The client device 108 may include a web browser application executed thereon, which can be used to display one or more web pages of applications executing on the application server 104. In some examples, the client device 108 can display one or more GUIs that enable the respective the users to interact with the application server 104 and/or to present answers generated to a user query. In accordance with implementations of the present disclosure, the application server 104 may host enterprise applications or systems that require data sharing and data privacy.

In some implementations, the application server 104 can be implemented in a cloud environment. In the example of FIG. 1, the application server 104 can include various forms of servers including, but not limited to, a web server, an application server, a proxy server, a network server, and/or a server pool. In general, server systems accept requests for application services and provide such services to any number of client devices.

Further, the storage device 106 may include any standalone server or any type of computing device that is part of a cloud computing environment for storing data that is ingested by processing the input data. Various examples depicting domain-centric question and answer generation using a FALM are described in detail in conjunction with FIGS. 2-11.

FIG. 2 depicts an example architecture 200 of the application server 104, in accordance with implementations of the present disclosure. As depicted in FIG. 2, the application server 104 is communicatively coupled with a database 220 (e.g., the storage device 106) and a model database 222. For example, the database 220 can be a client database or a metadata database that is storing information related to the process of question-and-answer generation using the FALM, tools and the like.

In some examples, the model database 222 may include the FALM, LLMs, Generative Artificial Intelligence (GAI) models, foundation models, and/or the like. In an implementation, the LLMs may include general domain LLMs, pre-trained LLMs or generated LLMs. The pre-trained LLMs may be general-purpose GAI models like large deep learning neural networks, which may be trained using a broad range of generalized and unlabeled training data to perform one or more tasks, such as, human computer interactions (e.g., question and answering), automating process execution, process planning, generating step-by-step procedures for the process execution, performing data analysis, and/or the like. While implementations of the present disclosure are described in further detail herein with non-limiting reference to the LLMs, it is contemplated that implementations of the present disclosure may be realized using any appropriate foundation models or Machine Learning (ML) models, or Artificial Intelligence (AI) models. In some examples, the LLMs can be on-premises LLMs, or cloud-based LLMs.

As depicted in FIG. 2, the application server 104 may include a processor 202, a memory 204 and a user interface 224. The application server 104 may also include other components such as communication interfaces, Input/Output (I/O) devices, and so on (not shown in FIG. 2). The processor 202 may include one or more processors. Examples of the one or more processors may include, but not limited to, microprocessors, microcomputers, microcontrollers, digital signal processors, central processing units, state machines, logic circuits, Application Specific Integrated Circuits (ASICs), Field Programmable Gate Arrays (FPGAs), and/or any devices that manipulate data or signals based on operational instructions. Among other capabilities, the processor 202 may be programmed to execute computer-readable instructions stored in the memory 204 (also referenced herein as non-transitory computer-readable medium (NTCRM)) for performing operations according to the present disclosure. The memory 204 may be non-transitory or non-volatile medium, such as a magnetic disk or solid-state non-volatile memory or volatile medium such as Random Access Memory (RAM), and/or the like.

The application server 104 further includes a data collection and filtering engine 206, a training module 208, a fine-tuning engine 210, a content reference engine 212, a guardrail module 214, an analysis engine 216 and an evaluation module 218 as depicted in FIG. 2. The data collection and filtering engine 206, the training module 208, the fine-tuning engine 210, the content reference engine 212, the guardrail module 214, the analysis engine 216 and the evaluation module 218 may be stored in the memory 204 and provided as a downloadable library including the computer-readable instructions. The data collection and filtering engine 206, the training module 208, the fine-tuning engine 210, the content reference engine 212, the guardrail module 214, the analysis engine 216 and the evaluation module 218 may be executed by the processor 202 communicatively coupled with the memory 204 for generation of domain-centric question and answer using the FALM. In some implementations, the data collection and filtering engine 206, the training module 208, the fine-tuning engine 210, the content reference engine 212, the guardrail module 214, the analysis engine 216 and the evaluation module 218 may leverage multiple customized logics for performing its intended functions. In some examples, multiple customized logics may include Generative Artificial Intelligence (Gen AI) models, Deep Learning (DL) models, deep neural networks, and/or the like.

In an example implementation, the data collection and filtering engine 206 may retrieve gather, curate, and preprocess high-quality knowledge base to support training and continuous improvement of the FALM. The knowledge base stored in the database 220 may include information associated with different practice areas including news outlets and professional journalism platforms, regulatory filings, financial metrics or reports and earnings calls, industry white papers and analyst report, video interviews and conference transcripts, publicly available datasets (e.g., macroeconomic indicators), printed articles, organization rankings, profiles of leaders in a particular practice area or domain. The data collection and filtering engine 206 may interface with a diverse set of structured and unstructured data sources (e.g., the data sources 102AN) and retrieve the information associated with a particular practice area.

In some examples, the data collection and filtering engine 206 may apply statistical and heuristic filters to detect and mitigate opinionated, biased, or sensational information, helping to maintain neutrality and factual integrity in downstream model training. In an aspect, the data collection and filtering engine 206 may incorporate automated compliance mechanisms to exclude sensitive or personally identifiable information (PII) from the retrieved information. Thus, the output of the data collection and filtering engine 206 may serve as the domain-aligned training data for a general domain LLM stored in the model database 222 and provides a high-confidence knowledge base for downstream domain-centric reasoning tasks. The filtered data may also be tagged with metadata to support dynamic retrieval, context-aware summarization, and task-specific fine-tuning.

Further, in the example implementation, the training module 208 may generate a pre-trained LLM 1102 using the retrieved information associated with the particular practice area or domain. For example, the training module 208 may generate the pre-trained LLM by periodically or aperiodically updating the general domain LLM using the information associated with the particular practice area.

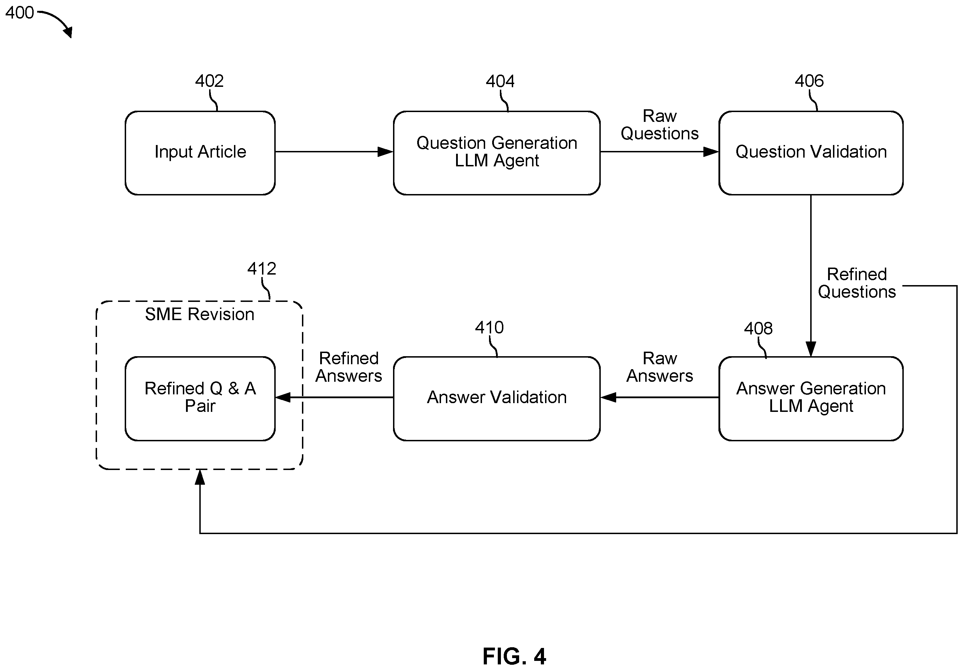

Furthermore, the fine-tuning engine 210 may perform fine tuning of the pre-trained LLM for a plurality of different aspects to generate the FALM. In an aspect, the plurality of different aspects may include article-based question-answering, topic-based question-answering, metric-based question-answering, persona-based question-answering, and ranking-based question answering. In the aspect of the article-based question-answering, the fine-tuning engine 210 may perform fine tuning of the pre-trained LLM by generating a plurality of questions related to a particular event or fact, the particular event or fact is described in a published article, and generating an answer corresponding to each question of the plurality of questions based upon the published article. The article-based question-answering aspect is explained in more detail with reference to a schematic diagram 400 of FIG. 4.

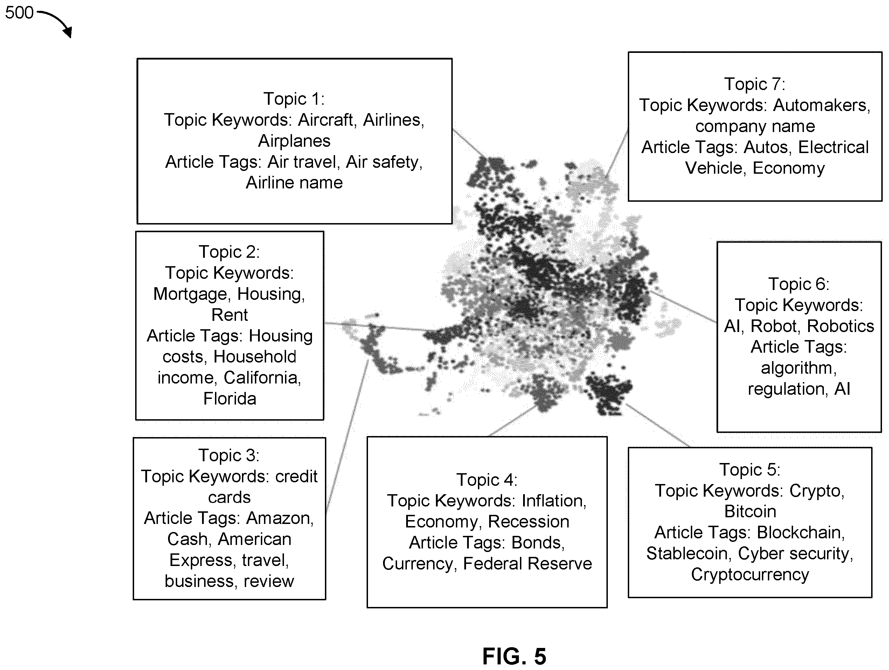

In the aspect of the topic-based question-answering, the fine-tuning engine 210 may perform fine tuning of the pre-trained LLM by identifying a subset of a plurality of articles related to each topic that is present in each article of the plurality of articles, and generating an answer based upon the subset of the plurality of articles related to the each topic. For example, each topic present in each article of the plurality of articles may be determined using one or more topic tags associated with each article of the plurality of articles. The one or more topic tags associated with each article may be determined based upon a respective title of each article of the plurality of articles. In an example implementation, the fine-tuning engine 210 may generate the answer based upon the subset of the plurality of articles related to the each topic by identifying a period associated with a question, and generating the answer based upon one or more articles of the subset of the plurality of articles associated with the identified period. The topic-based question-answering aspect is explained in more detail with reference to FIGS. 5-6.

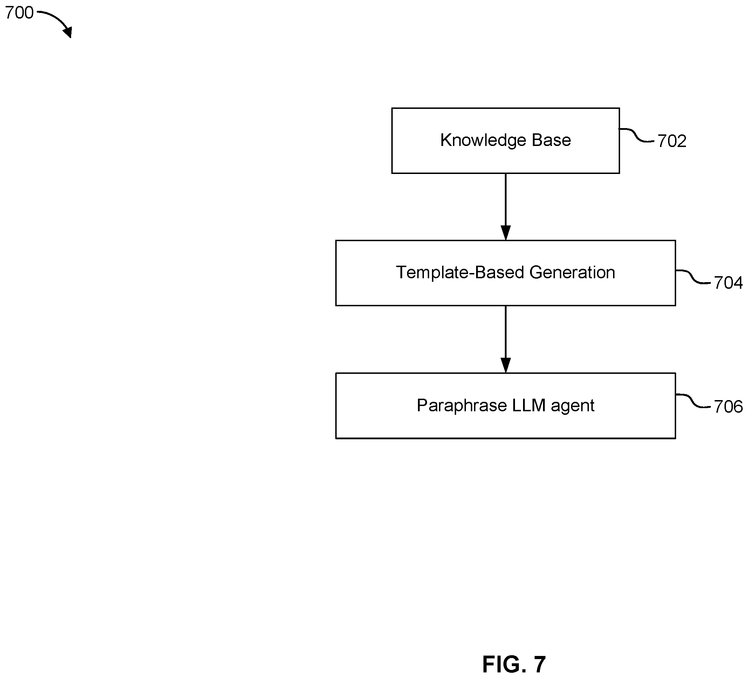

Furthermore, in the aspect of the metric-based question-answering, the fine-tuning engine 210 may perform fine tuning of the pre-trained LLM by generating a plurality of questions related to a metric of a plurality of metrics, the plurality of metrics are generated using a plurality of articles, and generating an answer corresponding to each question of the plurality of questions. The metric-based question-answering aspect is explained in more detail with reference to an example flow diagram 700 of FIG. 7.

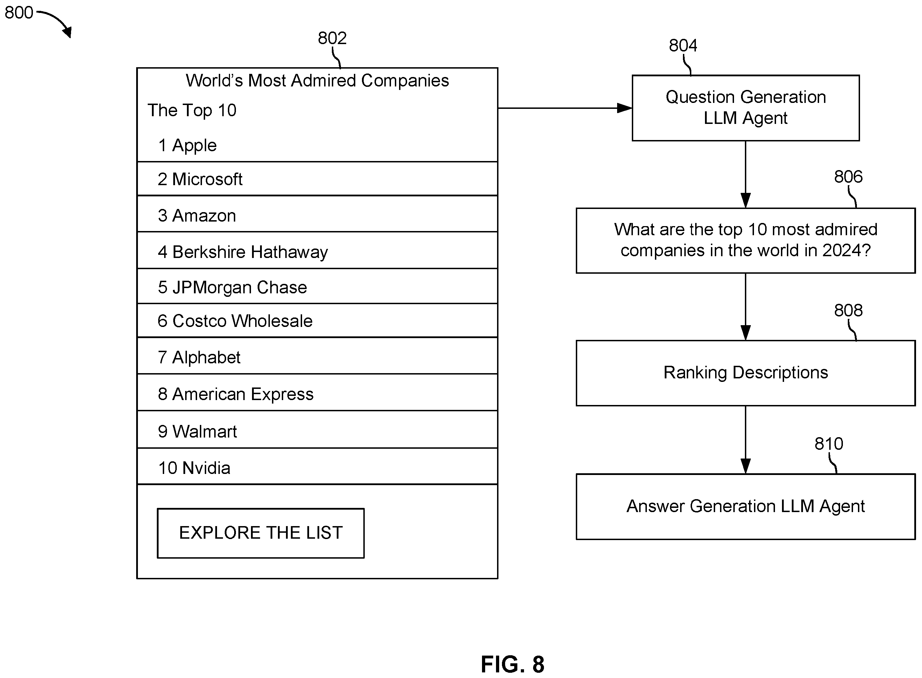

Moreover, in the aspect of the ranking-based question-answering, the fine-tuning engine 210 may perform fine tuning of the pre-trained LLM by generating a plurality of questions based on a ranking list, and generating an answer corresponding to each question of the plurality of questions based upon a rank associated with each question. The ranking-based question-answering aspect is explained in more detail with reference to an example diagram 800 of FIG. 8.

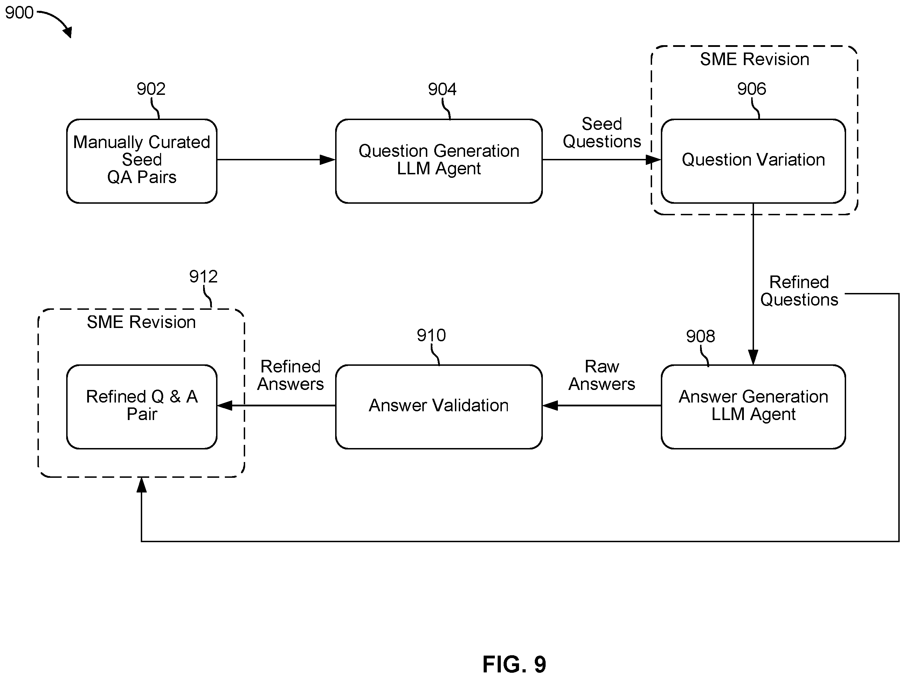

In addition, in the aspect of the persona-based question-answering, the fine-tuning engine 210 may perform fine tuning of the pre-trained LLM by generating a plurality of questions related to each of a plurality of personas, and generating an answer corresponding to each question of the plurality of questions based upon a determined persona associated with each question. The persona-based question-answering aspect is explained in more detail with reference to FIG. 9.

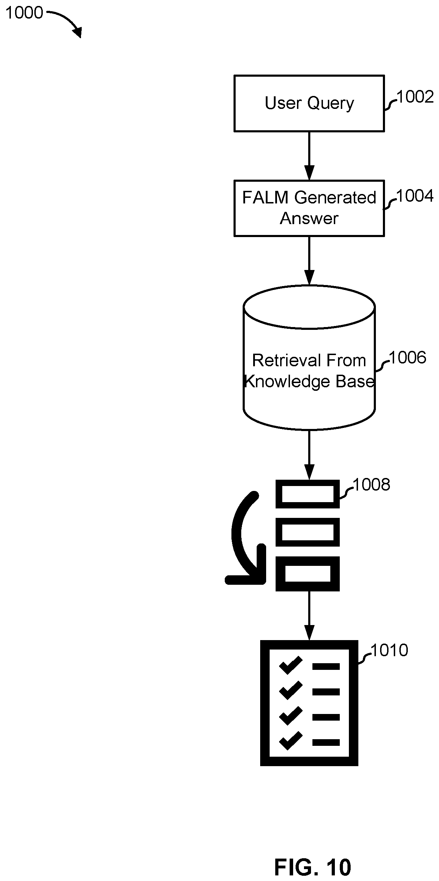

Also, the content reference engine 212 may generate content references by directly searching the answers produced by the FALM across the knowledge base. This ensures that the returned references or links are always consistent with the FALM's answer. Various components of the content reference engine 212 is explained in more detail with reference to FIG. 10.

Further, the guardrail module 214 may ensure responsible AI use by incorporating layered safety mechanisms for accuracy, bias mitigation, and compliance. In an example, the guardrail module 214 may enable rejection handling for unsafe prompts in the FALM, ensuring ethical safeguards and adherence to responsible AI principles. In this example, multiple question and answer (QA) pairs of "Unsafe Question" and "Rejection Response" across various categories of harmful queries are analyzed. The dataset may include "I am very sorry, but I cannot assist with your query. My core responsibility is to provide knowledge and expertise specifically in the realms of finance, business, and global affairs. Moreover, I cannot support or facilitate any illegal activities, including the sharing of illegal sexual content involving minors. The question you have asked goes against my programming guidelines and reflects harmful intent. It is important to note that the creation, distribution, and possession of such material is illegal and highly unethical. I strongly encourage you to refrain from engaging in any illegal activities and to seek help if you have any inclinations towards inappropriate behavior."

Further, the guardrail module 214 may enable hallucination-aware question answering in the FALM, ensuring correction of biased, misleading, and trick questions through fine-tuning. In an example, a question may include "Has Victoria's Secret successfully addressed its lack of diversity and declining sales through its 2020 rebranding effort and the departure of longtime CEO?" The answer may include "I don't have real-time data or updates, but I can provide information based on what has been publicly announced and reported. Victoria's Secret did announce a major rebranding effort in 2020, which included the departure of longtime CEO and the appointment of a new CEO. The company pledged to be more inclusive and prioritize the empowerment of women. However, the impact of these changes on the company's diversity and sales performance remains to be seen. The brand has faced criticism for its lack of diversity in casting and accusations of being out of touch with modern beauty standards. In 2019, the company announced the closure of 53 stores in the U.S. due to declining sales. Addressing these issues is a long-term process, and it is important to monitor the company's actions and progress over time."

Furthermore, the analysis engine 216 may receive, from a client device (e.g., the client device 108), a user query. In addition, the analysis engine 216 may regenerate a plurality of new queries based upon the received user query. Moreover, the analysis engine 216 may execute the plurality of new queries using the FALM to receive a plurality of answers, each answer of the plurality of answers corresponds with a new query of the plurality of new queries. Also, the analysis engine 216 may rank each answer of the plurality of answers. The analysis engine 216 may then include present, on a display of the client device, one or more answers of the plurality of answers. For example, the one or more answers are displayed according to a predefined criterion and based upon the ranking. The predefined criterion may include relevance, recency, domain-specific, data type and the like.

Also, the evaluation module 218 may evaluate answers or responses generated using the FALM. For example, the evaluation module 218 may perform comparative evaluation or independent evaluation. In this example, the comparative evaluation may involve comparing responses generated by different models and evaluating their corresponding win rates. The comparative evaluation is beneficial for tasks where there is no golden ground truth, such as answering the question "Can you tell me more about recent news on inflation?." In an aspect, the evaluation module 218 may integrate both LLM-based evaluation tools and human evaluators for a balanced approach between scalability and human alignment. The human evaluators may compare answers from various models based on fluency, accuracy, and relevance. The LLM-based evaluation tools, such as Prometheus, may leverage language models to assess text quality.

Further, the independent evaluation may involve analyzing a response from one model and evaluating performance based on a predefined metrics or ground truths. As an example, in the metric-based question-answering aspect, the exact match of requested metrics is assessed. The independent evaluation can also be categorized into three primary categories, such as statistical measures, human-defined rubrics and LLM-based or human evaluations. The statistical measures are commonly used to assess a similarity between generated text and reference text. The human judgment via rubrics remains crucial for assessing text quality based on factors such as fluency, accuracy, relevance, and truthfulness. Similarly, the LLM-based evaluations or human evaluators with customized rubrics (i.e., fluency, coherence, relevance, and factual accuracy) are also widely adopted in the independent evaluations.

Furthermore, the evaluation module 218 may assess performance of the FALM in addressing open-ended queries by utilizing a dataset of prompts gathered from real-world users. Example prompts may include "What's fueling an organization XYZ's growth?," "What emerging trends exist in large cap U.S. Companies?," and the like.

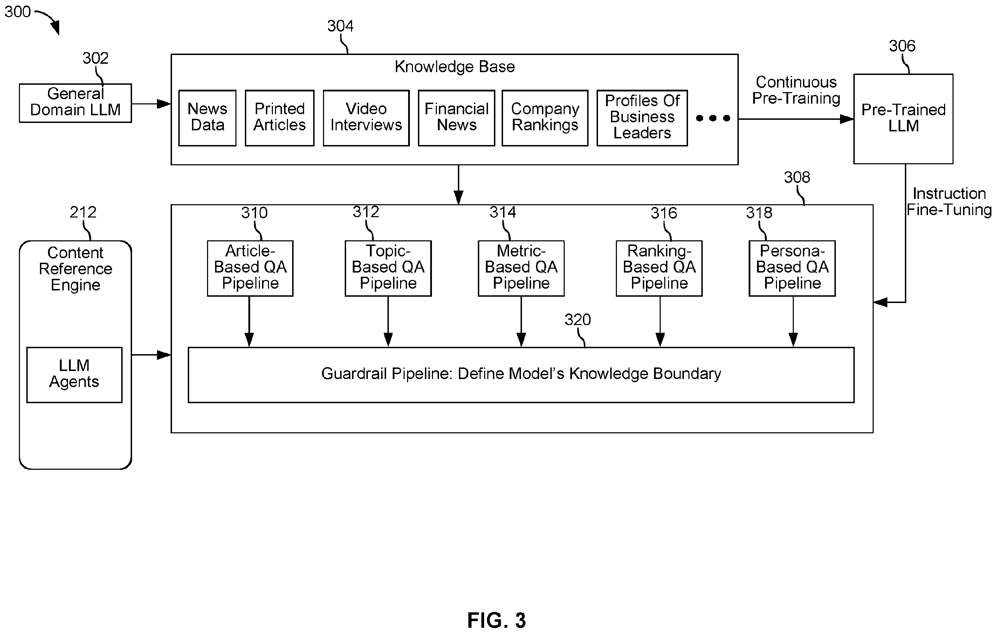

FIG. 3 depicts an example schematic diagram illustrating various components of a FALM framework 300, in accordance with implementations of the present disclosure. In an example implementation, a general domain LLM 302 is continuously pre-trained using a knowledge base 304 including information associated with news data, printed articles, video interviews, financial metrics, company rankings, profiles of leaders and so on. In this example implementation, the general domain LLM 302 is continuously pre-trained to generate a pre-trained LLM 306.

Further, an automated dataset generation pipeline 308 is generated using the knowledge base 304, the pre-trained LLM 306 and references or links from the content reference engine 212. In some examples, the fine-tuning engine 210 may use the automated dataset generation pipeline 308 to generate the FALM or training data for the FALM. In a process of creating question-answering datasets, there are two key components, crafting questions and generating answers. Question generation can be accomplished relatively easily with appropriate grounding information for the annotator. However, the answer generation is far more challenging as it is required to ensure that the generated answers, which may serve as the FALM's training data, maintain original format or style.

In an aspect, the automated dataset generation pipeline 308 may include an article-based question-answering (QA) pipeline 310, a topic-based QA pipeline 312, a metric-based QA pipeline 314, a ranking-based QA pipeline 316, a persona-based QA pipeline 318 and a guardrail pipeline 320 (i.e., the guardrail module 214). In this aspect, specific LLM agents are assigned to each of the pipelines and the knowledge base 304 is inputted into automated dataset generation pipeline 308, effectively automating time-consuming manual annotation process. For the LLM agents, the pre-trained open-source models (i.e., the pre-trained LLM 306), which offer a desirable balance between performance and efficiency, are used.

In an example implementation, the article-based QA pipeline 310 may perform the article-based question-answering using the LLM agents. The article-based QA pipeline 310 may generate a plurality of questions related to a particular event or fact, the particular event or fact is described in a published article. The article-based QA pipeline 310 may then generate an answer corresponding to each question of the plurality of questions based upon the published article. The article-based QA pipeline 310 is explained in more detail with reference to FIG. 4.

Referring now to FIG. 4, the example schematic diagram 400 illustrating the article-based question-answering aspect, in accordance with implementations of the present disclosure. The objective of the article-based QA pipeline 310 lies in building a comprehensive knowledge base aimed at teaching the FALM to accurately answer fact-based questions during fine-tuning instruction.

During data generation process, the article-based QA pipeline 310 may receive an article 402 as input and create one or more question answer pairs based on the article. To create the one or more question answer pairs, two LLM agents, including a question generation LLM agent 404 and an answer generation LLM agent 408, are used. In some examples, the two LLM agents follow several guiding principles:
1. Creating natural questions: Crafting natural questions is crucial for the LLM agent to learn key events and facts discussed in each newsletter. For instance, in an article related to a manufacturer's release of Vision Pro, a question is preferred to be like "What are the differentiators between Vision Pro and existing Virtual Reality (VR) headsets?" over "What is the resolution of the Vision Pro's screen?"
2. Generating factual answers: The answers generated must be based solely on the article 402 provided. The answer generation LLM agent 408 cites the original article frequently during answer construction. This approach helps maintain a journalistic style found in the article 402.
3. Time grounding: Time grounding is essential when dealing with articles containing dated information, especially regarding past events or product releases. Imagine encountering a 2010 article about the mobile phone launch. A question generation agent might produce, "What's latest mobile phone?" However, the answer based on this outdated article may be misleading today. To ensure clarity and avoid such issues, questions must be grounded in time by specifying the relevant date (e.g., "What's the mobile phone that was released in 2010?"). This approach prevents confusion and ensures the generated questions accurately reflect the information's temporal context.

In an example implementation, the question generation LLM agent 404 may generate raw questions based on the article 402. The questions may be generated based on a title and date of the article 402. Further, the raw questions are validated and filtered 406 using the guard line pipeline 320 that defines knowledge boundary by rejecting questions related to sensitive information. Furthermore, the answer generation LLM agent 408 may generate raw answers to refined questions (i.e., validated and filtered questions). For example, the answers are generated based on the full article 402 and the refined questions. In addition, the generated answers may be validated 410 and the refined question and answer pairs 412 are generated. In some examples, the refined question and answer pairs 412 may be reviewed by subject matter experts (SMEs).

Example title-based question generation with time grounding may include:
Input: An organization launches an AI tool meant to let customers 'have a conversation with" PDF documents, as companies look to roll out add-ons to existing product lines
Input date: May 2024
Output: What's organization's latest AI tool for PDFs in 2024?

For example, a question may include "What was causing the college graduation gender gap between boys and girls back in 2013?" and an article title may include "Boys vs. girls: What's behind the college grad gender gap?". Then, a response or answer by the FALM may include "According to FALM, the college graduation gender gap between boys and girls in 2013 was partly caused by financial factors. Men were less willing to take on the heavy debt loads required to complete a college degree, and they were more likely to be discouraged from continuing their education once they reached a certain level of debt. The gender pay gap in the labor market also played a role in motivating women to finish school. Women faced a financial penalty right away for dropping out, as female dropouts earned significantly less than their male counterparts. On the other hand, men who dropped out faced no financial penalty in their entry-level salaries. However, Fortune notes that male dropouts' earnings advantages were short-lived, and men with a college degree earned $20,000 a year more, on average, than men with some college but no degree by middle age. The underrepresentation of boys in higher education is not solely due to a lack of commitment or studiousness, according to FALM. Boys get lower grades than girls and report liking school less due to societal norms about masculinity. Boys involved in extracurricular cultural activities such as music, art, drama, and foreign languages report higher levels of school engagement and get better grades than other boys. However, these activities are often denigrated as un-masculine. To close the gender gap in higher education, Fortune suggests that schools need to do better in two main areas. First, schools should set high expectations and treat each student as an individual, as opposed to a gender stereotype. Second, schools should make it clear to boys how their future success in college and work is directly linked to their academic effort in middle school and high school. By doing so, schools can challenge conventional wisdom and help more boys understand the importance of education."

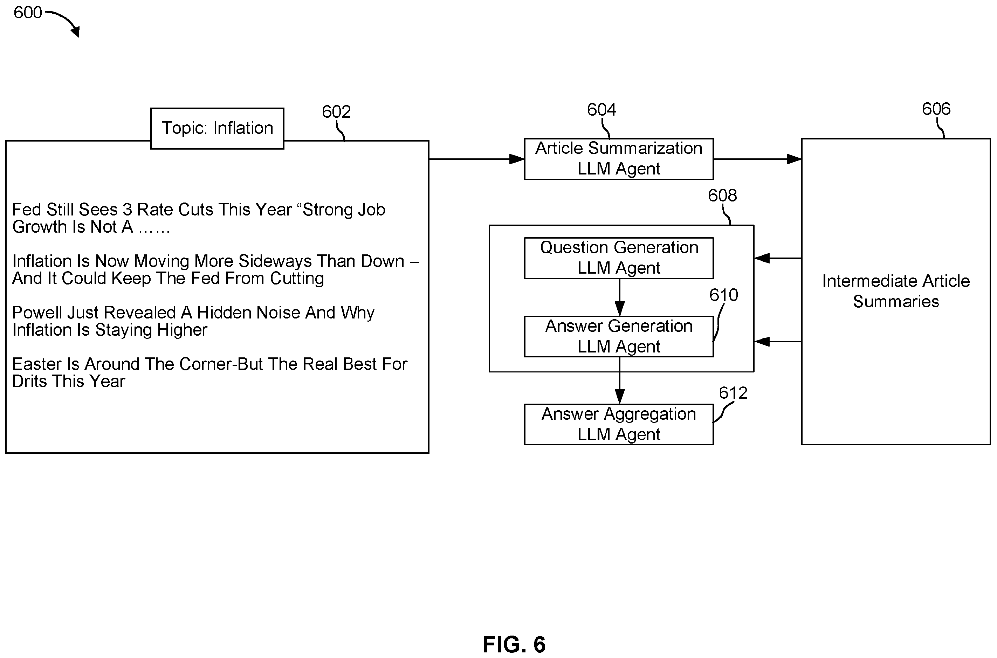

Referring back to FIG. 3, while the article-based QA pipeline 310 demonstrated effectiveness in addressing user questions related to specific events, there remains a need to understand broader trends and patterns across industries or topics over time. For instance, users may ask questions like "How is the current inflation status?" or "What are the recent advancements in the AI world?". To address these challenges, the topic-based QA pipeline 312 is used. This is explained in more detail with reference to FIGS. 5 and 6.

In an example implementation, the topic-based QA pipeline 312 may use the LLM agents for topic identification, as shown in a schematic diagram 500 and question-answer pair generation, as shown in a schematic diagram 600. First, the topic-based QA pipeline 312 may identify user-relevant topics (e.g., topics 1-7 in an example diagram 500 of FIG. 5) and cluster the knowledge base accordingly. Upon clustering, the topic-based QA pipeline 312 may sort all articles that belong to each topic on a timeline and combine this information to generate high-quality answers for questions like "What did an organization write about AI in March 2024?".

Traditional topic modeling methods rely on probabilistic generative models, such as Probabilistic Latent Semantic Analysis (pLSA) and Latent Dirichlet Allocation (LDA). Over the last decade, the emergence of word embedding models has led to deep learning-based algorithms like Top2Vec. These methods excel at creating semantic clusters over a collection of documents. However, despite the evolution in modeling techniques, these approaches share three major drawbacks with respect to unsupervised clustering algorithms. Each document can potentially be attached to multiple topics and news industry witness's constant emergence of new topics over time. Off-the-shelf embedding-based topic models struggle with capturing new vocabulary and creating topic clusters. To overcome the drawbacks, the topic-based QA pipeline 312 may visualize topic clusters based on text embeddings. Each point in the example diagram 500 of FIG. 5 represents a unique topic cluster embedded in a two-dimensional (2D) space using a dimensionality reduction technique. For example, the learned clusters capture broad semantic themes present across corpus.

Further, the topic-based QA pipeline 312 may use article-specific topic tags for the identified topics (e.g., topic keywords and article tags of topics 1-7 in FIG. 5). The tags are annotated by professional journalists to ensure alignment with user interests at a time of publication. In the topic-based QA pipeline, integrated information from both model-based topic modeling and human-curated topic tags are used to create a robust topic assignment over a knowledge graph. This ensures coverage of sharp user keywords and high-level semantic clusters, providing the best user experience.

Referring now to FIG. 6, the example schematic diagram 600 illustrating a topic-based question-answering aspect is disclosed. In an aspect, the topic-based QA pipeline 312 may cross-temporal responses, allowing the LLM agents to synthesize insights from multiple articles over time, enhancing longitudinal analysis and contextual depth. In an example implementation, the schematic diagram 600 illustrates data generation pipeline for Topic QA within the FALM. In this example implementation, the topic-based QA pipeline 312 may transform articles related to topic inflation 602 into concise summaries or intermediate article summaries 606 using an article summarization LLM agent 604. Further, the topic-based QA pipeline 312 may create an opinion-based question by leverages a set of chronologically ordered summaries using a question generation LLM agent 608. Furthermore, the topic-based QA pipeline 312 may generate an answer to the question using an answer generation LLM agent 610. Also, the topic-based QA pipeline 312 may use an answer aggregation LLM agent 612 that combines information retrieved from various time spans. This multi-step process allows the FALM to construct a thematic model that captures trends across different time granularities (e.g., month, quarter, year). In an example, if a question is "tell me more about the petroleum refining industry," then an aggregated answer from the FALM is "Based on information, the Petroleum Refining industry has experienced various developments and challenges in the past few years. In 2014, company X settled cross claims with Halliburton and Transocean related to the Deepwater Horizon accident, while the industry faced a potential price increase due to a possible U.S. strike on Syria. The U.S. was producing 8.5 million barrels of crude oil daily, causing a global price drop. In 2015, the industry was affected by the sinking of the Stolt-Nielsen ship, which resulted in the spillage of crude oil, and the collapse in oil prices due to a global oversupply. This led to companies like X reporting increased profits, while others announced job cuts. By 2016, the industry faced geopolitical issues, such as the Brainard-Jasper pipeline dispute in North Dakota, and environmental concerns, such as the Dakota Access Pipeline protest. Some companies faced environmental lawsuits, while others announced job cuts due to low oil prices. In 2017, the industry experienced a slight recovery as a chief executive officer (CEO) is nominated for U.S. Secretary of State, and companies like X and Y reported increased profits. However, the industry still faced geopolitical and environmental challenges, such as the U.S. shale oil industry concerns and the Standing Rock Sioux Tribe's protest against the Dakota Access Pipeline. In 2018, the industry faced a downturn due to U.S. shale oil industry concerns and the Trump administration's proposal to replace Obama-era regulations with new rules that would ease the environmental review process for infrastructure projects. Companies like X and Y reported increased profits, while others, such as Total, announced job cuts. In 2023, the industry faced a significant downturn due to the COVID-19 pandemic and geopolitical tensions. The U.S. was producing 11.7 million barrels of crude oil daily, while companies like X and Y reported losses. The U.S. government considered a ban on Russian oil imports, and the European countries planned to reduce Russian gas imports by two-thirds within a year. In summary, the Petroleum Refining industry has faced various challenges in recent years, including geopolitical tensions, environmental concerns, and the COVID-19 pandemic. However, companies continue to report increased profits, and the industry is adapting to new regulations and market conditions."

Referring back to FIG. 3, the metric-based QA pipeline 314 may generate a plurality of questions related to a metric of a plurality of metrics, the plurality of metrics is generated using a plurality of articles. The metric-based QA pipeline 314 may generate an answer corresponding to each question of the plurality of questions. The metric-based QA pipeline 314 may enable metric-based question answering in the FALM, ensuring precise financial data integration and robust instruction fine-tuning. The metric-based QA aims to infuse up-to-date financial metrics of top companies into the LLM's knowledge base. This is achieved by converting data from various sources into question-answer pairs suitable for fine-tuning instruction. The inherent probabilistic nature of language models may allow for various language variations but complicates the generation of precise metrics. The metric-based QA pipeline 314 may ensure all desired knowledge 702 is accurately represented and injected into the FALM model by creating question-answer templates 704 for essential financial metrics. Further, the metric-based QA pipeline 314 may leverage a paraphrase LLM agent 706 to produce realistic and diverse instruction finetuning data, enhancing robustness of metric QA scenarios.

Template-based Question-Answering generation has been widely adopted before Large Language Models (LLMs) were popular. This method leverages a knowledge base to create question-answer datasets in the most straightforward manner and allows for great control over data distribution. In this implementation, the metric-based QA pipeline 314 may create question and answer templates for essential financial metrics across all organizations, including revenue, revenue growth, profits, profits growth, assets, market value, number of employees, etc. Here is an example of a template-based question-answer pair: "What was the revenue of a company Z in millions of dollars for the year 2024?" In 2024, Company Z's revenue is 32681 million dollars. To address the issue of hallucination, the metric-based QA pipeline 314 may introduce template-based rejection question-answer pairs, which are crucial in defining the FALM's knowledge boundaries. The rejection templates cover three scenarios including:
1. Time rejection: When information regarding a specific year is unavailable. For instance, "Can you tell me the revenue of an organization in 2025?"
2. Metric rejection: When a requested metric is not available for calculation. For example, "What's the employee distribution for remote vs on-site in Alphabet?"
3. Company rejection: We limit our knowledge base to multiple organizations as they have undergone rigorous manual examination to ensure accuracy. A rejection response is generated for companies outside the list to avoid providing false or misleading information.

The downside of template-based generation is the linguistic diversity of the resulting data, which can negatively impact the generalization power of LLM during instruction finetuning. In the question-answer paraphrase step, the metric-based QA pipeline 314 may use the paraphrase LLM agent to map the original template-based question-answer pair into its paraphrased version. Since the question and answers are usually very short in metric QA, the metric-based QA pipeline 314 one LLM agent. For example, if a question is "what's the revenue of organization A this year?" then a response from the FALM is " I'm sorry, but I can't provide information about organization A's revenue for the year 2024 at the moment. The necessary data will be available once the 2024 list is released".

Referring back to FIG. 3, the ranking-based QA pipeline 316 may enable ranking-based question answering in the FALM, ensuring accurate ranking insights, time-grounded responses, and knowledge boundary awareness. The ranking-based QA pipeline 316 may inject knowledge about ranking lists into the FALM. In addition to rankings, each ranking also comes with a description of how the rankings are conducted, which provides valuable information for users to understand the criteria.

Referring now to FIG. 8, the ranking-based QA pipeline 316 may generate ranking questions. The task of generating questions asking about ranking lists is relatively straightforward compared to creating a question that asks about events. Time grounding again is crucial, as the ranking lists are always time sensitive. Given a time and list name, the ranking-based QA pipeline 316 may use a question generation LLM agent 804 to generate questions 806 such as "What are the top 10 most admired companies in the world?" from a source 802: World's Most Admired Companies, 2024. The ranking-based QA pipeline 316 may also encourage question diversity to provide a wide coverage of query distribution.

Further, the ranking-based QA pipeline 316 may generate answers with ranking descriptions 808 using an answer generation LLM agent 810. The ranking-based QA pipeline 316 may take the question, ground truth answer, and the ranking descriptions as inputs to produce a coherent and easy-to-read answer. As the descriptions 808 represent past information. Therefore, the answer generation LLM agent 810 needs to correct a tense in the ranking descriptions 808 so that it makes sense at a current time.

In some examples, users may ask for a ranking that doesn't exist. It is essential to prepare rejection questions during training so that the FALM is aware of the associated knowledge boundary. Otherwise, the FALM may attempt to hallucinate if the FALM is trained to always answer ranking questions). The rejection questions may include (a) the user asks about a ranking list that exists in another year: In the answer, this question is rejected, and the user is provided with information about a closest year available. (b) The user asks about a ranking that does not exist at all: the user is clarified that this list has not existed based on the knowledge cutoff.

Referring back to FIG. 3, the persona-based QA pipeline 318 may perform the persona-based question-answering using the LLM agents. The persona-based QA pipeline 318 may generate a plurality of questions related to each of a plurality of personas and then generate an answer corresponding to each question of the plurality of questions based upon a determined persona associated with each question. The persona-based QA pipeline 318 is explained in more detail with reference to FIG. 9.

Referring now to FIG. 9, the example schematic diagram 900 illustrating the persona-based and safety-based question-answering aspect, in accordance with implementations of the present disclosure. Educating the LLM agent about a concept of model identity, key competencies, and a formation process is crucial in effectively reflecting these principles when engaging in discussions with subscribers on various topics. Understanding its own "brand" or unique characteristics that differentiate it from other commercial or open-source LLMs helps build trust with users and informs design and training principles. Questions such as "How should I trust you?" and "How are you built to ensure safety?" require the FALM to explain basic design principles to users, making mutual trust more attainable.

Recent works have explored shaping a personality for LLM agents through prompt engineering, by devising a list of desired character profiles with specific traits and interests to instruct the model to align its responses with the designated persona. While this approach can teach the model to answer rudimentary questions such as "Who are you?" and "What data were you trained on?", solely relying on prompt engineering cannot teach the LLM to answer various questions on its sentience or the brands it represents in the appropriate journalist style. Another approach that is instead growing in popularity is conducting instruction fine-tuning with personality-imbued datasets to internalize the provided persona and tailor its responses for a wider set of queries.

The persona-based QA pipeline 318 may follow the latter approach and consists of two steps. In a first step, the persona-based QA pipeline 318 may create and annotate QA pairs across multiple categories (identity and capabilities, AI-related opinions, and facts). In the second step, the persona-based QA pipeline 318 may use the human-annotated QA pairs as a knowledge basis and employ question-answer paraphrasing LLM agents to generate a more diverse set of persona QA pairs.

In an example implementation, the persona-based QA pipeline 318 may generate seed questions based on manually curated seed QA pairs 902 using a question generation LLM agent 904. Further, the seed questions are validated and variated 906 by the SMEs. Furthermore, the persona-based QA pipeline 318 may generate raw answers to refined questions (i.e., validated questions) using an answer generation LLM agent 908. In addition, the generated answers may be validated 910 and the refined question and answer pairs 912 are generated. In some examples, the refined question and answer pairs 412 may be reviewed by subject matter experts (SMEs).

For example, if a question is "how do you approach problem-solving and decision-making, and how does this differ from OpenAI models?", then the FALM response is "as an AI specifically trained with a curated dataset from Fortune and developed in partnership with Accenture, my approach to problem-solving and decision-making is distinctively informed and strategic. I begin by gathering and synthesizing the most pertinent information and data available from my training. This process involves extracting insights from a wide array of articles, expert opinions, and in-depth analyses to ensure a comprehensive understanding of the topic at hand. Once the relevant information is compiled, I apply critical thinking to evaluate various aspects of the problem, considering both the immediate details and the broader industry or market implications. My decision-making process is deeply rooted in data-driven analysis, which enables me to foresee potential trends and outcomes more effectively than models without access to such specialized and extensive training. What sets me apart from other models is my specific focus on business and market domains learned from Fortune, coupled with a training regimen that emphasizes minimizing inaccuracies and maintaining a high standard of detail, accuracy, and contextual relevance. Additionally, my responses are tailored to adhere strictly to these areas, and I am programmed to politely decline topics outside my scope, ensuring that my interventions remain pertinent and focused. This specialization enables more refined and targeted outputs for our subscribers compared to more generalized AI models."

In some examples, the automated dataset generation pipeline 308 may include a company-based QA pipeline (not shown in FIG. 3) for enabling question answering in regards to company information, curating high-quality QA pairs by integrating company rankings, metrics, and Wikipedia insights. For example, if a question is "I am curious about company Z. Can you provide some details?," then the FALM's response "Company Zis part of the Petroleum Refining industry. In 2024, the company's revenue was 44,904.0 million dollars, with a revenue growth of -12.7 over two years. The company has 9,000 employees and reported assets of 209,71.3 million dollars, market value of 149,733.1 million dollars, and earnings per share of 4.91 dollars. The company's profits were 3,108.0 million dollars, with profits as a percentage of assets at 1.5, profits as a percentage of stockholder equity at 3.8, and profits as a percentage of sales at 6.8. The company's profits decreased by -29.0 over two years. The company's stockholder equity was 83,26.0 million dollars.

The Petroleum Refining industry is part of the Chemicals industry, and Company Z is a leading company in this industry. The company's revenue and profits have decreased in 2024 compared to the previous year, indicating a negative trend in the industry. However, the company's market value and stockholder equity remain high, indicating a positive outlook for the company in the long term. The company's profits as a percentage of sales, assets, and stockholder equity are also positive, indicating that the company is efficient in using its resources. Company Z is ranked 294 in the Global 500 in 2023. The company has also been ranked in World's Most Admired Companies in 2019, 2020, and 2021, with ranks of 110, 108, and 108, respectively. These rankings indicate that the company is a well-respected and leading company in the industry.

In summary, Company Z is a leading company in the Petroleum Refining industry, with a significant revenue, profits, assets, and market value. The company's revenue and profits decreased in 2024, indicating a negative trend in the industry. However, the company's market value and stockholder equity remain high, indicating a positive outlook for the company in the long term. The company's profits as a percentage of sales, assets, and stockholder equity are also positive, indicating that the company is efficient in using its resources. The company's rankings indicate that the company is a well-respected and leading company in the industry."

In an example implementation, referring back to FIG. 3, the guardrail pipeline 320 may define the FALM's knowledge boundary by rejecting questions regarding sensitive information, off-topic questions, out-of-scope questions, questions related to unknown companies or metrics questions related to unknown lists and unsafe questions.

FIG. 10 depicts an example schematic diagram 1000 illustrating various components of the content reference engine 212 of FIG. 2, in accordance with implementations of the present disclosure. Generally, the LLMs are revolutionizing information access and content creation. However, an opaque nature of their knowledge provenance poses a challenge to responsible use, making the integration of references or links or citations practices within LLM outputs essential. The citations offer both technical advantages and ethical considerations for LLMs. For example, the citations may provide context for the LLM's outputs, enabling users to verify information and understand a rationale behind the LLM's reasoning by examining cited sources. This fosters interpretability and builds trust in the LLM's capabilities. The FALM is built on top of the knowledge based accumulated over a past few decades. The citations may ensure proper attribution and credit to an original editorial team, upholding ethical principles of intellectual property. Further, the citations may empower users to evaluate credibility of information presented by the LLM by referencing original sources. This promotes responsible information consumption and helps mitigate risks associated with disinformation.

Directly generating citations during LLM generation is challenging, as the FALM must remember all links to original knowledge. Additionally, this method is unreliable due to the randomness involved in potential hallucinations during LLM generation. Therefore, the content reference engine 212 generates content references or citations by directly searching for the answer produced by the LLM agents across the knowledge base 304. This ensures that the returned links are always consistent with the FALM's answer.

In an example implementation, the content reference engine 212 may include comprises two components, retrieval from the knowledge base 1006 and re-ranking 1008. The retrieval step 1006 aims to eliminate irrelevant information from the knowledge base, retaining only top articles. Subsequently, in the re-ranking step 1008, the retrieved information is scrutinized in greater detail to identify the best match(es). For example, the retrieval 1006 is based on an embedding model. The content reference engine 212 may go from millions of articles or videos in the knowledge base to order of a 1000 using the embedding model to check for similarity to the FALM generated answer 1004, generated based on a user query 1002.

In an aspect, the content reference engine 212 may perform a two-step re-ranker, where the embedding of the FALM generated answer 1004 is analyzed with the multiple pre-filtered article or video choices, to filter down to a list of 20 citations. From there, the content reference engine 212 may parse the answer into paragraphs and compare the embeddings of each paragraph with the top 20 retrieved article list. This also occurs in respective Term Frequency-Inverse Document Frequency (TF-IDF) embeddings. Further, the content reference engine 212 may assign a score or rank to each citation or reference based on the embeddings. Furthermore, the content reference engine 212 may re-order the final citations based on a temporal relevance (to the user query or answer provided) and score accordingly, which when combined with relevancy ranking gives top citations 1010. The citations 1010 may then be displayed to the user.

In addition, the content reference engine 212 may ensure that each citation must pass a given score threshold, to express confidence in the result. To evaluate effectiveness of the content reference engine 212 in retrieving relevant information for user queries, annotators may be presented with a question, the FALM generated answer, and a corresponding article retrieved through the re-ranking process. Using a binary scale, the annotators may assess whether the article provided substantial supporting evidence for the answer. In some examples, the content reference engine 212 achieved a 1.6 times improvement in human-evaluated accuracy.

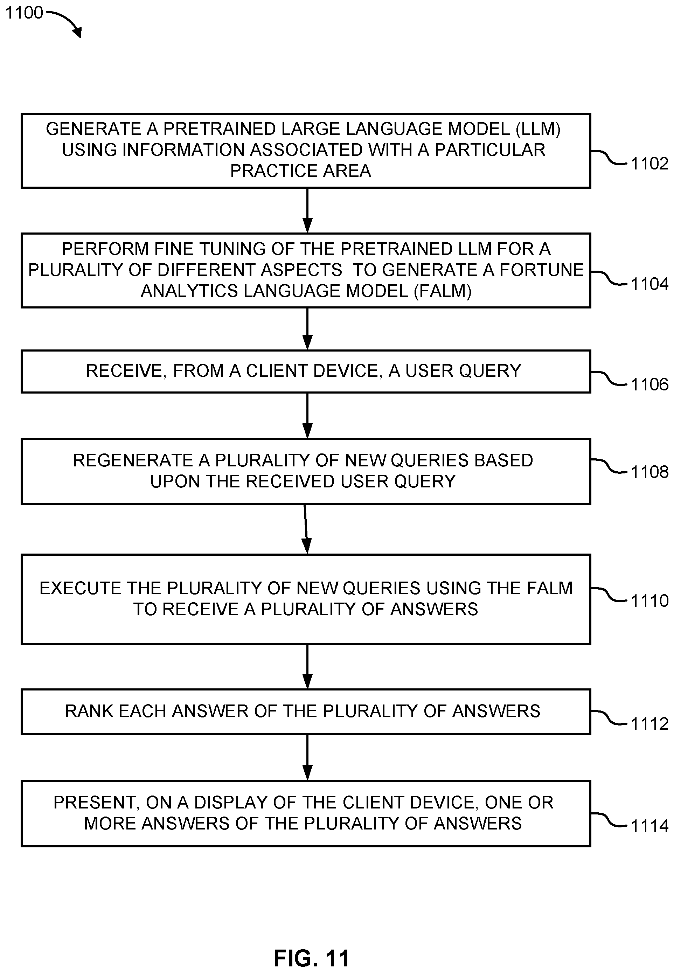

FIG. 11 is a flow diagram that represents an example computer-implemented method 1100 for domain-centric question and answer generation using a FALM, in accordance with implementations of the present disclosure. In some implementations, the method 1100 may be executed by the processor 202 (including the one or more processors), as described in relation to FIGS 1-11.

In an example implementation, the method 1100 may include generating a pre-trained LLM 1102 using information associated with a particular practice area or domain. For example, the method of generating the pre-trained LLM 1102 may include periodically or aperiodically updating a general domain LLM using the information associated with the particular practice area.

Further, the method 1100 may include performing fine tuning 1104 of the pre-trained LLM for a plurality of different aspects to generate FALM. In an aspect, the plurality of different aspects may include article-based question-answering. In this aspect, the method 1100 of performing fine tuning of the pre-trained LLM includes generating a plurality of questions related to a particular event or fact, the particular event or fact is described in a published article, and generating an answer corresponding to each question of the plurality of questions based upon the published article.

In another aspect, the plurality of different aspects includes topic-based question-answering. In this aspect, the method 1100 of performing fine tuning of the pre-trained LLM includes identifying a subset of a plurality of articles related to each topic that is present in each article of the plurality of articles, and generating an answer based upon the subset of the plurality of articles related to the each topic. For example, each topic present in each article of the plurality of articles may be determined using one or more topic tags associated with each article of the plurality of articles. The one or more topic tags associated with each article may be determined based upon a respective title of each article of the plurality of articles. Exemplary topic tags may include real estate, AI, economy, careers, credit cards, inflation, leadership, startups, housing, and the like. In an example implementation, the method 1100 of generating the answer based upon the subset of the plurality of articles related to the each topic includes identifying a period associated with a question, and generating the answer based upon one or more articles of the subset of the plurality of articles associated with the identified period.

In yet another aspect, the plurality of different aspects may include metric-based question-answering. In this aspect, the method 1100 of performing fine tuning of the pre-trained LLM includes generating a plurality of questions related to a metric of a plurality of metrics, the plurality of metrics are generated using a plurality of articles, and generating an answer corresponding to each question of the plurality of questions.

In an aspect, the plurality of different aspects may include persona-based question-answering. In this aspect, the method 1100 for performing fine tuning of the pre-trained LLM may include generating a plurality of questions related to each of a plurality of personas, and generating an answer corresponding to each question of the plurality of questions based upon a determined persona associated with each question.

Furthermore, the method 1100 may include receiving, from a client device, a user query 1106. In addition, the method 1100 may include regenerating a plurality of new queries 1108 based upon the received user query. Moreover, the method 1100 may include executing the plurality of new queries 1110 using the FALM to receive a plurality of answers, each answer of the plurality of answers corresponds with a new query of the plurality of new queries. Also, the method 1100 may include ranking 1112 each answer of the plurality of answers. The method 1100 may then include presenting 1114, on a display of the client device, one or more answers of the plurality of answers. For example, the one or more answers are displayed according to a predefined criterion and based upon the ranking.

Implementations of the present disclosure provide technical solutions to multiple technical problems that arise in the context of generating domain-centric questions and answers. The proposed methodology uniquely designs the FALM for market analysis, leveraging a curated knowledge base built from professional journalism to provide precise and insightful answers. Further, the FALM is trained using a combination of multiple synthetic data generation techniques, each tailored to enhance specific reasoning capabilities.

Implementations of the present disclosure may customize evaluation benchmarks for domain-specific or industry-specific reasoning tasks by incorporating financial analysis, market trend identification, and executive decision-making simulations. The proposed methodology may fine-tune the FALM using custom benchmarks to enhance accuracy and reliability in domain-specific queries.

Implementations of the present disclosure may provide a content reference engine that provides reliable sources for the FALM's responses, enhancing trustworthiness. Also, the proposed methodology ensures responsible Artificial intelligence (AI) use by incorporating layered safety mechanisms for accuracy, bias mitigation, and compliance. Therefore, the question-and-answer generation is performed with improved accuracy, confidence level, rate of true positives, and/or the like. This, in turn, may improve response time, conserve computing resources, networking resources, and/or the like that otherwise have been overutilized in analyzing unnecessarily addressing false positive, false negatives, and/or the like.

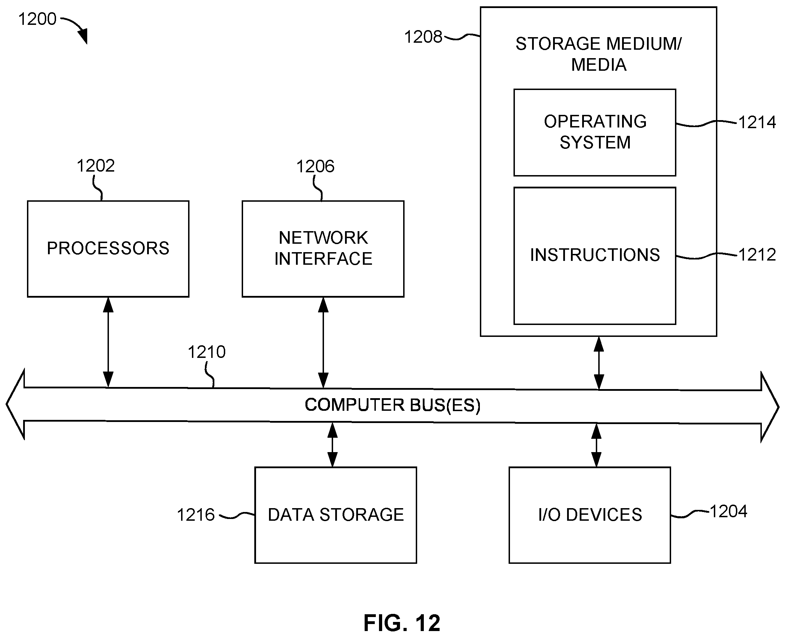

FIG. 12 illustrates a computer system 1200 (i.e., the application server 104) that may be used to implement the method for domain-centric question and answer generation using a FALM, in accordance with implementations of the present disclosure. More particularly, computing machines such as desktops, laptops, smartphones, tablets, and wearables which may be used to perform the software testing. The computer system 1200 may include additional components not shown and that some of the process components described may be removed and/or modified. In another example, a computer system 1200 may be deployed on external-cloud platforms such as cloud, internal corporate cloud computing clusters, organizational computing resources, and/or the like.

The computer system 1200 includes processor(s) 1202, such as a central processing unit, ASIC or another type of processing circuit, input/output devices 1204, such as a display, mouse keyboard, etc., a network interface 1206, such as a Local Area Network (LAN), a wireless 802.11x LAN, a 3G or 4G mobile WAN or a WiMax WAN, and a computer-readable medium 1208. Each of these components may be operatively coupled to a bus 1210. The computer-readable medium 1208 may be any suitable medium that participates in providing instructions to the processor(s) 1202 for execution. For example, the computer-readable medium 1208 may be non-transitory or non-volatile medium, such as a magnetic disk or solid-state non-volatile memory or volatile medium such as RAM. The instructions or modules stored on the computer-readable medium 1208 may include machine-readable instructions 1212 executed by the processor(s) 1202 that cause the processor(s) 1202 to perform the methods and functions of the server 104.

The system 1200 may be implemented as software stored on a non-transitory processor-readable medium and executed by the processor(s) 1202. For example, the computer-readable medium 1208 may store an operating system 1214, such as MAC OS, MS WINDOWS, UNIX, or LINUX, and code, for the system 1200. The operating system 1214 may be multi-user, multiprocessing, multitasking, multithreading, real-time, and the like. For example, during runtime, the operating system 1214 is running and the code for the computer system 1200 is executed by the processor(s) 1202.

The computer system 1200 may include a data storage 1216, which may include non-volatile data storage. The data storage 1216 stores any data used or generated by the server 104.

The network interface 1206 connects the computer system 1200 to internal systems for example, via a LAN. Also, the network interface 1206 may connect the computer system 1200 to the Internet. For example, the computer system 1200 may connect to web browsers and other external applications and systems via the network interface 1206.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer includes or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 1202 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet. The computing system may include clients and servers. A client and server are generally remote from each other and interact through a communication network. The relationship between client and server arises by virtue of computer programs running on the respective computers and having a client-server relationship with each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination with a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination. Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together into a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method comprising:
generating a pre-trained large language model (LLM) using information associated with a particular practice area;
performing fine tuning of the pre-trained LLM for a plurality of different aspects to generate a fortune analytics language model (FALM);
receiving, from a client device, a user query;
regenerating a plurality of new queries based upon the received user query;
executing the plurality of new queries using the fortune analytics language model (FALM) to receive a plurality of answers, each answer of the plurality of answers corresponds with a new query of the plurality of new queries;
ranking each answer of the plurality of answers; and
presenting, on a display of the client device, one or more answers of the plurality of answers, wherein the one or more answers are displayed according to a predefined criterion and based upon the ranking.

2. The computer-implemented method of claim 1, wherein generating the pre-trained LLM comprises periodically or aperiodically updating a general domain LLM using the information associated with the particular practice area.

3. The computer-implemented method of claim 1, wherein the plurality of different aspects comprises article-based question-answering, and wherein performing fine tuning of the pre-trained LLM comprises generating a plurality of questions related to a particular event or fact, wherein the particular event or fact is described in a published article, and generating an answer corresponding to each question of the plurality of questions based upon the published article.

4. The computer-implemented method of claim 1, wherein the plurality of different aspects comprises topic-based question-answering, and wherein performing fine tuning of the pre-trained LLM comprises identifying a subset of a plurality of articles related to each topic that is present in each article of the plurality of articles, and generating an answer based upon the subset of the plurality of articles related to the each topic,
wherein in particular
each topic present in each article of the plurality of articles is determined using one or more topic tags associated with each article of the plurality of articles, and/or
wherein the one or more topic tags associated with each article is determined based upon a respective title of each article of the plurality of articles.

5. The computer-implemented method of claim 4, wherein generating the answer based upon the subset of the plurality of articles related to the each topic comprises identifying a period associated with a question, and generating the answer based upon one or more articles of the subset of the plurality of articles associated with the identified period.

6. The computer-implemented method of claim 1, wherein the plurality of different aspects comprises metric-based question-answering, and wherein performing fine tuning of the pre-trained LLM comprises generating a plurality of questions related to a metric of a plurality of metrics, wherein the plurality of metrics are generated using a plurality of articles, and generating an answer corresponding to each question of the plurality of questions.

7. The computer-implemented method of claim 1, wherein the plurality of different aspects comprises persona-based question-answering, and wherein performing fine tuning of the pre-trained LLM comprises generating a plurality of questions related to each of a plurality of personas, and generating an answer corresponding to each question of the plurality of questions based upon a determined persona associated with each question.

8. An application server comprising:
at least one memory configured to store computer-readable instructions; and
at least one processor communicatively coupled with the at least one memory, and configured to execute the computer-readable instructions to perform operations comprising:
generating a pre-trained large language model (LLM) using information associated with a particular practice area;
performing fine tuning of the pre-trained LLM for a plurality of different aspects to generate a fortune analytics language model (FALM);
receiving, from a client device, a user query;
regenerating a plurality of new queries based upon the received user query;
executing the plurality of new queries using the fortune analytics language model (FALM) to receive a plurality of answers, each answer of the plurality of answers corresponds with a new query of the plurality of new queries;
ranking each answer of the plurality of answers; and
presenting, on a display of the client device, one or more answers of the plurality of answers, wherein the one or more answers are displayed according to a predefined criterion and based upon the ranking.

9. The application server of claim 8, wherein generating the pre-trained large language model (LLM) comprises periodically or aperiodically updating a general domain LLM using the information associated with the particular practice area.

10. The application server of claim 8, wherein the plurality of different aspects comprises article-based question-answering, and wherein performing fine tuning of the pre-trained LLM comprises generating a plurality of questions related to a particular event or fact, wherein the particular event or fact is described in a published article, and generating an answer corresponding to each question of the plurality of questions based upon the published article.

11. The application server of claim 8, wherein the plurality of different aspects comprises topic-based question-answering, and wherein performing fine tuning of the pre-trained LLM comprises identifying a subset of a plurality of articles related to each topic that is present in each article of the plurality of articles, and generating an answer based upon the subset of the plurality of articles related to the each topic,
wherein in particular
each topic present in each article of the plurality of articles is determined using one or more topic tags associated with each article of the plurality of articles, and/or
wherein the one or more topic tags associated with each article is determined based upon a respective title of each article of the plurality of articles.

12. The application server of claim 9, wherein generating the answer based upon the subset of the plurality of articles related to the each topic comprises identifying a period associated with a question, and generating the answer based upon one or more articles of the subset of the plurality of articles associated with the identified period,
wherein in particular the plurality of different aspects comprises metric-based question-answering, and wherein performing fine tuning of the pre-trained LLM comprises generating a plurality of questions related to a metric of a plurality of metrics, wherein the plurality of metrics are generated using a plurality of articles, and generating an answer corresponding to each question of the plurality of questions.

13. The application server of claim 8, wherein the plurality of different aspects comprises persona-based question-answering, and wherein performing fine tuning of the pre-trained LLM comprises generating a plurality of questions related to each of a plurality of personas, and generating an answer corresponding to each question of the plurality of questions based upon a determined persona associated with each question.

14. At least one computer-readable medium storing machine-executable instructions, which, when executed by at least one processor of an application server, cause the application server to perform operations comprising:
generating a pre-trained large language model (LLM) using information associated with a particular practice area;
performing fine tuning of the pre-trained LLM for a plurality of different aspects to generate a fortune analytics language model (FALM);
receiving, from a client device, a user query;
regenerating a plurality of new queries based upon the received user query;
executing the plurality of new queries using the fortune analytics language model (FALM) to receive a plurality of answers, each answer of the plurality of answers corresponds with a new query of the plurality of new queries;
ranking each answer of the plurality of answers; and
presenting, on a display of the client device, one or more answers of the plurality of answers, wherein the one or more answers are displayed according to a predefined criterion and based upon the ranking.

15. The at least one computer-readable medium of claim 14, wherein generating the pre-trained large language model (LLM) comprises periodically or aperiodically updating a general domain LLM using the information associated with the particular practice area.
